# EUROPEAN PATENT SPECIFICATION

(11) **EP 1 808 802 B1**
(45) Date of publication and mention of the grant of the patent: **06.08.2008**
(21) Application number: 05112129.1
(22) Date of filing: 14.12.2005
(51) Int. Cl.: G06Q 10/00

(54) **Method and apparatus for generating a new event directly from a document**
Verfahren und Vorrichtung zur Erzeugung eines neuen Ereignisses direkt aus einem Dokument
Procédé et appareil de génération d'un nouvel événement directement à partir d'un document

(43) Date of publication of application: 18.07.2007
(60) Divisional application: 08156866.9
(73) Proprietor: Research In Motion Limited, Waterloo, Ontario N2L 3W8 (CA)
(72) Inventor: Vanden Heuvel, David, Ottawa, Ontario K2G 5J7 (CA); Luu, Lap, Markham, Ontario L6C 2X7 (CA); Hardy, Michael Thomas, Waterloo, Ontario N2T 2J8 (CA); May, Darrell Reginald, Waterloo, Ontario N2V 2K6 (CA)
(74) Representative: Rickard, David John

(56) References cited:
- EP-A- 1 109 121
- WO-A2-20/04029772
- WO-A2-20/05079336
- US-B1- 6 505 167
- PATENT ABSTRACTS OF JAPAN vol. 1999, no. 14, 22 December 1999 (1999-12-22) & JP 11 259568 A (OMRON CORP), 24 September 1999 (1999-09-24)
- SMITH M A ET AL ASSOCIATION FOR COMPUTING MACHINERY: "VISUALIZATION COMPONENTS FOR PERSISTENT CONVERSATIONS" CHI 2001 CONFERENCE PROCEEDINGS. CONFERENCE ON HUMAN FACTORS IN COMPUTING SYSTEMS. SEATTLE, WA, MARCH 31 - APRIL 5, 2001, CHI CONFERENCE PROCEEDINGS. HUMAN FACTORS IN COMPUTING SYSTEMS, NEW YORK, NY : IEEE, US, 31 March 2001 (2001-03-31), pages 136-143, XP002301011 ISBN: 1-58113-327-8

## Description

The application relates to the field of communications and more particularly to an apparatus for and method of generating a new event from a document.

As will be understood by those in the art, a user can enter text into an email in plain text and certain recognizable elements or patterns of the plain text can be translated or displayed using hypertext markup language (html) hyperlinks for added functionality. For example, when an email address, a universal resource locator (URL) or a phone number is entered into an email, a hyperlink can be generated. For example, a typed email address could appear in html as:
<A HREF="mailtojohn.doe@testsite.com">john.doe@testsite.com</A>
The hyperlink usually appears as underlined text in a contrasting colour. When the email is displayed, the hyperlink can be used to invoke an application. In the above example, if iohn.doe@testsite.com is selected by the recipient, a new email message could be generated and john.doe@testsite.com would be inserted into the "TO:" field of the new email message. Similarly, if a hyperlinked URL is selected by a user, a browser application is automatically opened and the page identified by the URL is displayed. In the case of a phone number, a dialing application is invoked and the number is dialed.

As those skilled in the art will appreciate, many times, a user will receive a meeting invitation in the form of an email rather than a formal meeting request created through a calendar application like Microsoft® Office Outlook®. Alternately, many times a discussion occurs via an email thread which ultimately results in a meeting to resolve outstanding issues. In either case, if the user wishes to create an event based on the originating email, the user must open an application and create the event by manually entering the event details, or cutting and pasting from the originating email thread. Although this works adequately, it would be preferable if an event could be easily generated in an application directly from the originating email.

US6505167 discloses an automated service for messaging and scheduling, in which a message to analyze is determined: the probability that the user would like to review a calendar or to schedule an appointment is determined, based on information in the message, the message and options are selected based on a scheduling probability.

In order to overcome the limitations of the current state of the art there is provided in the present application an apparatus for and method of generating a new event directly from a document. The new event could be a calendar event or task for example, but other types of event are also considered to be in the scope of the present application. The document could be an email or webpage for example, but other types of document are also considered to be in the scope of the present application.

In one embodiment, the time and date of the event contained in an email is automatically recognized and displayed to the user in the style and function of an html hyperlink. Selecting the time and date hyperlink generates a menu selection, offering a user the ability to create a new event into which the date/time information will be inserted, along with other information extracted from the email. For example, the subject of the event is extracted from the subject of the email, while the event attendees are taken from the "TO", "CC" and "BCC" fields. Specific date/time information in an email is correlated to a known date/time format in a lookup table and then inserted into the new event. Relative terms like "tomorrow", "today" or days of the week (ie. Monday, Tuesday, Wednesday, etc.) are hyperlinked as well. Using a date/time detector module, relative terms could be translated into specific date/time entries which are inserted into the new event. In one embodiment, the date/time detector module comprises a lexical analyzer and parser to correlate words relating to time and date, to a specific date and time that can be used and recognized by an application, such as a calendar application or tasks application. In an alternate embodiment, an email thread is analyzed by a thread detector module and, if the number of replies in the email thread exceeds a defined threshold, the user is prompted to create an event via a menu selection. Similar to the first embodiment, if the user chooses to create an event, pertinent information such as subject and atttendees is extracted from the email and inserted into the newly created event. An additional feature relative to both of the above embodiments, provides for a link to be inserted into the event which can be used to access the complete email from which the event was created.

In accordance with a first aspect of the present application there is provided an event providing apparatus for use in a network communications system, said apparatus comprising: a storage device for storing information; a date/time detector module communicating with said storage device for receiving said information, said detector module adapted to: detect a condition that at least a portion of said information could be mapped to an event; identify date and time entries in said information; and generate a hyperlink to open an application capable of creating an event for each of said identified date and time entries, the date and time being provided to the application wherein the event can be generated in the application directly from the information; a display for displaying the time and date in the form of the hyperlink; and a prompter module communicating with said detector module for automatically providing a user prompt related to said event in response to selection of the hyperlink; wherein in response to a user interaction with said user prompt the application is started in which an event based on the hyperlinked date and time is created.

The apparatus may additionally include a thread detector module adapted to identify a thread in said information; and detect that a defined threshold is exceeded in said identified thread.

In another aspect the invention provides a method of creating a new event in an apparatus for use in a network communications system, the method comprising: storing a document in a storage device; receiving said document from said storage device into a detector module, said detector module being a date/time detector; analyzing said document, said analyzing identifying date and time entries; and based on the identified content in said document generating a hyperlink for each of said identified date and time entries to open an application capable of creating an event, said identified content being provided to the application wherein the event can be generated in the application directly from the document, displaying the time and date in the form of the hyperlink; automatically providing a user prompt related to said event in response to selection of the hyperlink; and in response to a user interaction with said user prompt starting the application in which an event based on the hyperlinked date and time is created.

The detector module may additionally include a thread detector and the method may then include determining if a defined threshold has been exceeded in respect of said thread: and if said defined threshold has been exceeded, prompting a user to create said new event.

Preferably, the step of creating a new event comprises; (a) generating a hyperlink for each of said identified first type of date and time entries and each of said identified second type of date time entries; (b) upon selection of said hyperlink by a user, presenting the user a choice of event type to be created; (c) upon selection of said choice of event type by the user, opening an application capable of creating said new event of said choice of event type; and (d) mapping specified fields in said document to specified fields in said new event.

The advantage of the method and apparatus disclosed in the present application is now readily apparent. When a user receives a document which has date/time information contained therein or an email thread which exceeds a defined threshold, a new event can easily be generated through date/time hyperlinks in the document or through a menu prompt arising from the email thread analysis. In either case, information contained in the document or email thread is readily mapped to the newly created calendar event or task

### BRIEF DESCRIPTION OF THE DRAWINGS

A better understanding of the present application will be obtained by considering the detailed description below, with reference to the following drawings in which:
Figure 1 depicts a sample user interface through which a new event can be created;
Figure 2 depicts the typical mapping pattern from an email to a calendar event;
Figure 3 depicts the system configuration used to filter a document;
Figure 4 depicts the interaction of a lexical analyzer, parser and symbol table;
Figure 5 depicts the process of generating a representation of an event using the constructs of Figure 4; and
Figure 6 depicts a wireless network supporting email.

### DESCRIPTION OF PREFERRED EMBODIMENTS

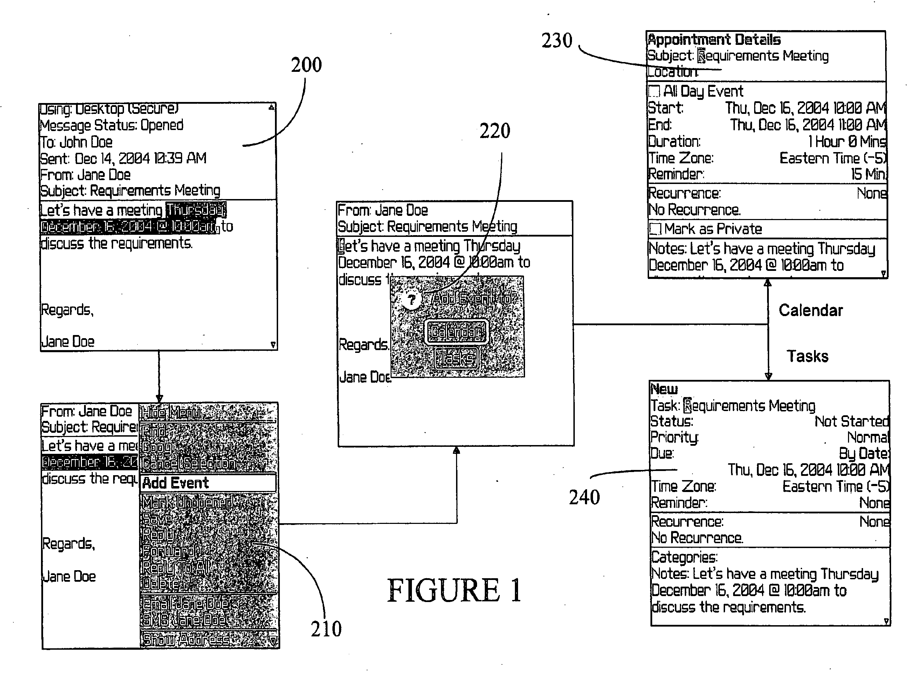

Figure 1 depicts a sample user interface through which an event can be created in accordance with a first embodiment. As shown in the drawing, a user receives document 200 and selects the highlighted date in the body of document 200. It should be understood by those skilled in the art that the document 200 could be an email message, a peer-to-peer personal identification number (PIN) message, short message service (SMS) message, multimedia messaging service (MMS) message, Instant Message, or the like and all such messages or documents, including web pages and word processing documents, are meant to be included within the scope of the application. A menu 210 generated from which the user selects "add event". The user is then prompted with a further menu 220 which asks whether they want to define a new calendar event or task for example but other event types are possible. If a calendar event is selected then calendar event screen 230 is generated and the information contained in document 200 is mapped to the various fields contained in calendar event screen 230. Alternately, if a task is selected then task screen 240 is generated and the information contained in document 200 is mapped to the various fields contained in task screen 240.

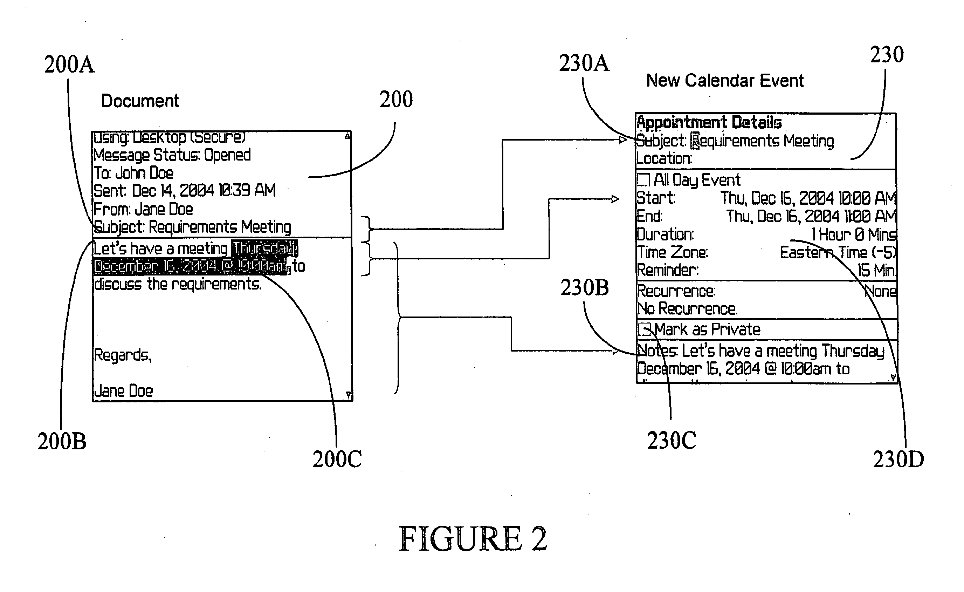

Figure 2 depicts the typical mapping pattern from document 200 to a new calendar event. As can been seen in the drawing, the subject 230A of the new calendar event is taken from the subject 200A of document 200. Meeting attendees (not shown) of the new calendar event are taken from the "To:" and "From:" lists of document 200 (CC list could be optional). Event Notes 230B are copied from the body 200B of document 200. Instead of simply copying body 200B of document 200 into Notes 230B, it is possible to insert an identifier into Notes 230B through which the body 200B of document 200 could be ascertained. This identifier could for example be a reference identifier, which uniquely references an email. One advantage of inserting a reference identifier into Notes 230B instead of inserting body 200B occurs in wireless messaging environments. In such an environment, it is beneficial to limit the amount of bandwidth used to communicate messages. If a reference identifier can be communicated wirelessly, instead of the actual body 200B of the document 200, bandwidth can be saved, saving a user money and wireless device battery power. The meeting privacy setting 230C could be determined by looking up the Sender in the address book. If the Sender is categorized as a personal (as opposed to business) contact, the calendar event privacy setting 230C could be marked as private.

With respect to the date and time entry for the calendar event, the date and time information is taken from the highlighted field 200C and inserted into time and date field 230D. Where actual times and dates are clearly indicated in document 200, recognition is relatively straightforward. It is simply a matter of using a lookup table to match the format of the given date or time, extract the required date or time information, and then insert the extracted information into the calendar event. For example, typical date and time formats contained in document 200 may include:

| Date Formats | Time Formats |
|---|---|
| MM/DD/YYYY | hh:mm [24 hour format] |
| MM/DD/YY | hh:mm AM or PM (12 hour format) |
| YYYY/MM/DD | hh:mmTZD (Time Zone Designator) |
| dd Month YYYY | hh o'clock |
| Month dd YYYY | |

If only YY is given for the year, the initial two digits are inferred from a "reference date", to be discussed below. As well, other valid separators which are recognized besides a backslash or colon include a comma, period, dash or space. Similarly, the following days of the week and month format are recognized:

| Days of the Week Formats | Month Formats | |
|---|---|---|
| Monday, Mon, Mo | January, Jan | August, Aug |
| Tuesday, Tues, Tue, Tu | February, Feb | September, Sept, Sep |
| Wednesday, Wed, We | March, Mar | October, Oct |
| Thursday, Thurs, Thu, Th | April, Apr | November, Nov |
| Friday, Fri, Fr | May | December, Dec |
| Saturday, Sat, Sa | June, Jun | |
| Sunday, Sunday, Su | July, Jul | |

The above formats are only meant to serve as examples of the possible date/time formats which could be matched to entries in the lookup table integral to the present embodiment. As will be appreciated, other expressions/abbreviations and their translations to other languages could also be included in the lookup table and are meant to be included within the scope of the present application. It is also possible to use a scheduling mechanism to select the date and time most proximate to the date and time inferred from the document, where each meeting attendee is available.

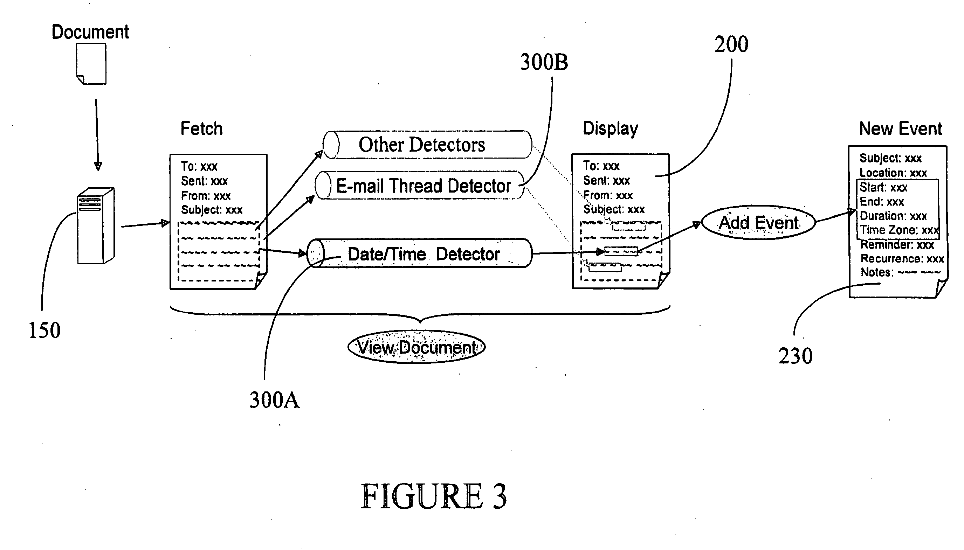

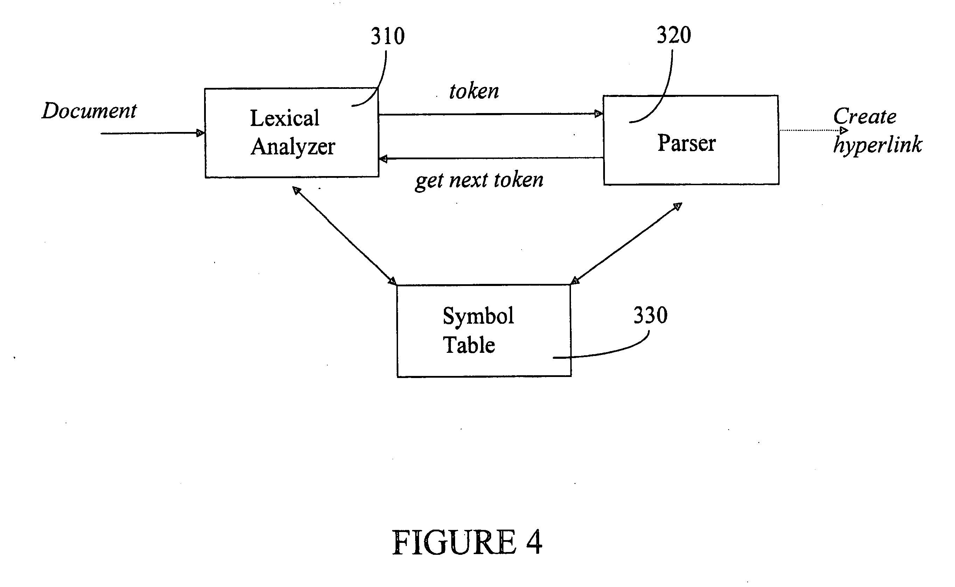

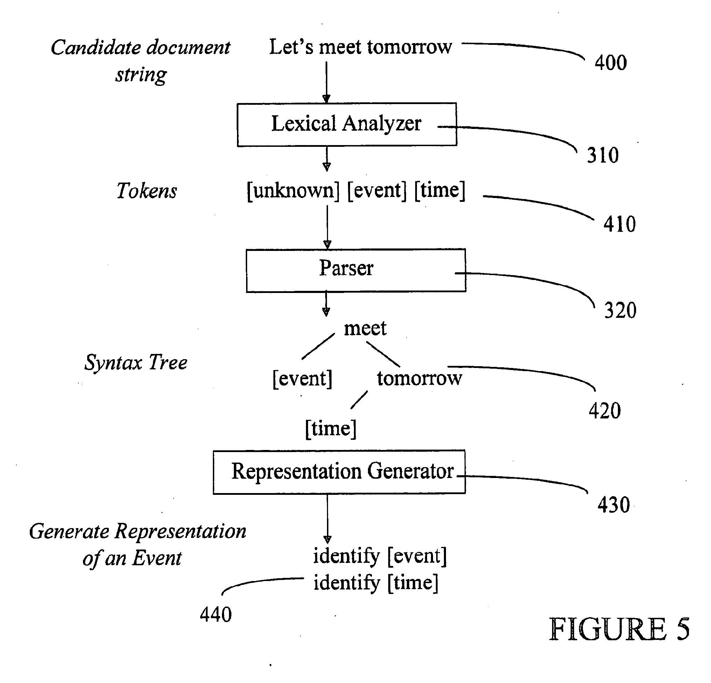

A more difficult scenario arises if relative terms are used to describe the preferred time and date in document 200. Relative dates can be in formats listed above with missing information, or they can be expressed in words such as: Today; Tomorrow; and Yesterday. Time of day relative expressions include Morning, Noon, Afternoon, Evening, Night. Holidays (e.g. Christmas, New Year's, Thanksgiving, Easter, Valentine's Day, etc.) must also be accommodated. In the present embodiment, a date/time detector module (see Figure 3) correlates generic words relating to time and date, to a specific calendar entry (i.e. date and time). The date/time detector module is essentially comprised of a sophisticated lexical analyzer communicating with a parser and symbol table (all of which are discussed below in relation to Figures 4 and 5). It should be appreciated that the preferred date and time resolution is to the minute (i.e. year, month, week, day, hour and minute), since such resolution is often required for a complete calendar event or task entry.

Critical to the resolution of a relative term is the determination of a reference date. A reference date is selected to infer any missing components of an incomplete or relative date/time. Examples of a Reference Date include (but are not limited to): Sent date of an email; Received date of an email; or Current date. The present embodiment uses a reference date inference rule (RDIR) to handle incomplete or relative terms used in document 200. Given a reference date and an incomplete (or relative date), an absolute date is inferred using the RDIR. The inference rule will determine how to apply the relative date to the reference date.
Example:
- Relative date happens in a future day/month/year
- Relative date happens in the current day/month/year
- Relative date happens in a past day/month/year
- Relative date happens at a fixed point in time.

For example, if the relative term "tomorrow" is indicated in the email, this term is compared to the Sent date of the email and the day following that date is deemed to be the date to be entered into the calendar event/ task. Incomplete or missing information in the date contained in the email can also be inferred. For instance, "Sept 27^{th}" is inferred to be within the same year as the message was sent unless the inferred meeting date would fall before the current date, in which case the assumption would be that the meeting will occur in the future (i.e. the next year) rather than the present year (e.g. if an email is sent on December 30^{th} for a meeting on January 5^{th}, the reference date inference rule would deem the meeting to be in the next year). It should be appreciated that the RDIR may change to suit the application or situation. It should also be appreciated that when a user selects a hyperlinked relative date/time entry, a display subset of absolute dates in order of probability is generated. The user's selection is entered as the default for future occurrences of the relative term.

Recurring calendar entries can also be inferred if a range of dates is detected. In order to handle situations where ambiguity arises, a default convention is established. For example, the statement "Monday to Friday" could be considered a single event with a duration of days, or five separate events occurring daily starting Monday and ending Friday. In such cases a default can be defined which may be modified as more information becomes available. For instance "Monday-Friday" could default to specifying a 5 day duration but "9:00am Monday-Friday" would indicate 5 separate events occurring at 9:00AM each day. Plural use of months and/or days of the week also indicate recurrence (e.g. Fridays). Recurrence is also specified using such expressions as "every Friday".

The embodiment as previously described focuses on detecting date/time information in a document and providing a hyperlink for the detected date/time. If the hyperlink is selected an application could be started in which a new event based on the hyperlinked date/time can be created. An event could also be triggered based on the detection of a pattern within a communication thread. As those in the art will appreciate, a thread can be comprised of a series of messages regarding the same subject. The term thread is generally applied to email messages, "an email thread", but is applicable to other types of message. Generally, the message which started the thread is followed chronologically by message responses from other recipients, thereby allowing the other recipients to follow the entire virtual conversation. In an alternate embodiment, a predefined trigger will be monitored to determine if action needs to be taken. An exemplary trigger could be the number of responses in a message thread. If the number of responses exceeds a defined threshold, the trigger will fire and the user will be presented with the option to create an event by, for example, invoking a menu selection or selecting an option in a dialog box. If the user chooses to create an event, the appropriate application (calendar application or tasks application for example) is invoked and the information in the email such as subject and attendees is mapped to the specified fields in the newly created event. With respect to the date of the event, a default date (i.e. the day following the date of the last entry in the email thread) is inserted into the event and manually changed if it is not suitable. As will be appreciated by those in the art, instead of using a threshold based on the number of responses in the email thread, other characteristics may be used. For example, the span of time that the email thread has been active could be analyzed and if it exceeds a defined period of time, the user will be prompted to create an event. Another threshold could be based on the number of people which have been added/removed from the "TO" and "CC" list i.e. if the number added exceeds a defined threshold the creation of an event will be prompted. Similar to the first embodiment discussed above, a thread detector module is used to locate an email thread and the information which will be assessed against the defined threshold.

Referring to Figure 3, the system configuration used to filter a document in either embodiment is depicted. This document could be an email for example. Document 200 is stored in a memory device 150, such as a mailbox, which could include a memory device associated with the server of an Internet service provider (ISP) or the server in a local area network (LAN) or a mailbox database on a handheld wireless device or any other memory device associated with a computing device, such as a personal computer. When document 200 is requested by, a user for example, a fetch command removes document 200 from memory device 150 and forwards it to a date/time or thread detector module (300A, 300B). The date/time or thread detector module scans document 200 using a lexical analyzer 310 cooperating with a parser 320 and a symbol table 330 (see Figure 4) and identifies all date/time/thread related information. In the case of date/time expressions, a hyperlink can be used in document 200 for each expression identified. The user could select the hyperlink, creating, as discussed above, a new event. In the case of a detected email thread, the user is prompted to create a new event. As understood by those in the art, date/time and thread detector module are shown in Figure 3 as separate entities although the combined functionality may be contained in a single entity.

Referring to Figure 4, the purpose of lexical analyzer 310 is to take a stream of input characters and decode them into higher level tokens that a parser can understand. Parser 320 takes the output of the lexical analyzer and operates by analyzing the sequence of tokens returned. Data structure or symbol table 330 is generally used to store information about source language constructs. This information is collected during an analysis phase and used during a synthesis phase to generate target code. For example, during lexical analysis, the character string, or lexeme, forming an identifier is saved as an entry in symbol table 330. The entry may be later augmented with information such as the type of identifier, its usage (e.g. procedure, variable or label) and its position in storage. During generation of the target code, this information is used to create the proper code to store and access the identifier.

As shown in Figure 5 for example, lexical analyzer (or scanner) 310 uses patterns that match strings in the candidate document string 400 and converts the string to one or more tokens 410. Tokens 410 are representations of the text string and simplify processing. As lexical analyzer 310 finds identifiers in the candidate document string 400, it enters them in symbol table 330. Symbol table 330 may also contain other information such as data type (integer or real) and location of the variable memory. All subsequent references to identifiers refer to the appropriate index of symbol table 330. Parser 320 uses grammar rules that allow it to analyze tokens 410 from lexical analyzer 310 and create a syntax tree 420. Syntax tree 420 imposes a hierarchical structure on tokens 410. For example, operator precedence and associativity are established in syntax tree 420. Representation of an event generator 430 generates a representation of an event 440 from the syntax tree 420. Using representation of an event 440 as an input, a new event can be created using an application, such as a calendar application or tasks application.

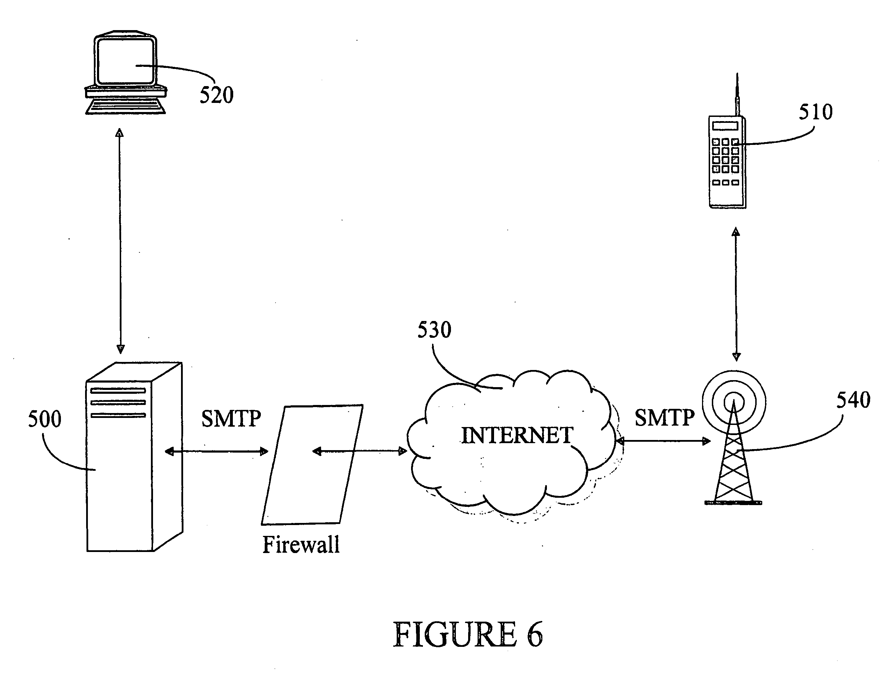

Referring to Figure 6, a wireless network supporting synchronized email is depicted. When an email arrives at mail server 500 for the user of wireless device 510, an email redirector in desktop 520 is notified. Mail server 500 could for example be a Microsoft® Exchange® server of a Lotus® Domino® server or a Novell® Groupwise® server. The email redirector retrieves a copy of the email message, compresses and encrypts it and sends it via the Internet 530 to wireless network 540. The outgoing message is unreadable email that can only be decrypted by wireless device 510. Wireless network 540 then delivers the email message to wireless device 510. At wireless device 510, the message is decrypted and decompressed and the user is notified of its arrival. The path from wireless device 510 to desktop 520 follows the same steps, except in reverse. When an email message is composed on wireless device 510, it is compressed, encrypted and sent back to the user's desktop 520 over wireless network 540 and Internet 530. Once retrieved from mail server 500, the redirector in desktop 520 decrypts and decompresses the email message and places it in the Outbox associated with an email application running on desktop 520 (e.g. Microsoft® Office Outlook®). The result of the above email transmission and reception process is that there is no difference between the email message that is sent from wireless device 510 and a message that is sent from desktop 520 - they both appear to originate from the user's corporate email address and a copy is placed in the user's Sent folder associated with Outlook. In addition to the above, when a lengthy email arrives in the user's corporate inbox, only the first two kilobytes of the message body is initially sent to wireless device 510. If an attachment is sent in the email, only the file name and attachment are sent. If the user wishes to read more of the message, the user, using wireless device 510, can request the next two kilobytes to be sent from mail server 500.

In accordance with the present application, a method can be triggered based on the detection of date/time information or an email thread matching specified parameters. If the user (at wireless device 510 or desktop 520) chooses to create a new event based on the triggered method, an application could be invoked and the information in the email such as subject and attendees could be mapped to the specified fields in the newly created event. Additionally, the body of the email could be copied into the Event Notes section of the calendar event. In accordance with another aspect of the present application, if a calendar event is created by a user (at wireless device 510 or desktop 520) based on the detection of date/time information or an email thread, a link to the email thread could be included in the Event Notes section of the event when the event is created. The link could be, for example, a reference identification (ID) of the email stored in mail server 500. The reference ID could for example be a MIME reference ID. By including the reference ID in the notes section, the message's content itself does not need to be sent over the air to wireless device 501. If the wireless device 501 does not already have the message, a request for the message's content could be made to mail server 500 if and when necessary. This will save both bandwidth and battery life. The email could be contained in the message list associated with the email application of wireless device 510. When the email is requested by the user, it will be displayed if found in the message list. Otherwise, a request will be sent to mail server 500 to retrieve the message. The request places the email in the message list and not in the notes section of the calendar event. This ensures that only one copy of the email is physically resident on wireless device 510 instead of a copy appearing in both the event and the message list.

Although the use of date/time information to generate a new calendar event or task have been the only exemplary embodiments of the present application which have been disclosed, it should be apparent to those skilled in the art that the generation of a new calendar event or task are only representative of the kind of applications for which the mined date/time information could be useful. For example, one such additional application for which date/time information could be relevant includes a billing application. In this case, a recipient may wish to log their time in relation to work performed for a particular client. Through an additional menu selection, the date/time information received in document 200 could be logged into a billing application which would ultimately generate an invoice for the client. Such alternate uses of the mined date/time information are meant to be included within the scope of the present application. Further, as an alternate to a received email, date/time information may be mined from a web page and a hyperlink created from which a new event can be created. Still further, those skilled in the art will appreciate that the method an apparatus which have been described could be interchangeably used in a terrestrial or wireless network supporting, in particular, email and browser functions.

A person understanding this application may now conceive of further alternative embodiments or variations of the above all of which are intended to fall within the scope of the present application as defined in the claims that follow.

## Claims

1. An event providing apparatus for use in a network communications system, said apparatus comprising:
a storage device for storing information;
a date/time detector module communicating with said storage device for receiving said information, said detector module adapted to:
detect a condition that at least a portion of said information could be mapped to an event;
identify date and time entries in said information; and
generate a hyperlink to open an application capable of creating an event for each of said identified date and time entries, the date and time being provided to the application wherein the event can be generated in the application directly from the information;
a display for displaying the time and date in the form of the hyperlink; and
a prompter module communicating with said detector module for automatically providing a user prompt related to said event in response to selection of the hyperlink;
wherein in response to a user interaction with said user prompt the application is started in which an event based on the hyperlinked date and time is created.

2. The apparatus of claim1 further comprising a lookup table for identifying a first type of said date and time entries, wherein said date/time detector module is arranged to identify said first type of said date and time entries, and wherein said first type of said date and time entries comprise a complete date and time format.

3. The apparatus of any preceding claim wherein said date/time detector module is arranged to identify a second type of said date and time entries, and wherein said second type of said date and time entries comprises an incomplete date and time format or a relative date and time expression.

4. The apparatus of claim 3 wherein said relative date and time expression comprises today, tomorrow, yesterday, morning, noon, afternoon, evening or night.

5. The apparatus of any preceding additionally including a thread detector module adapted to:
identify a thread in said information; and
detect that a defined threshold is exceeded in said identified thread.

6. The apparatus of claim 5 wherein said information is an email message, and wherein said thread detector module is adapted to:
identify a thread in said email message; and
if said defined threshold is exceeded in said identified thread, prompt a user to create said event.

7. The apparatus of claim 6 wherein said defined threshold is a number of responses received in said thread or a length of time that said thread has been active.

8. The apparatus of claim 5, 6 or 7, further comprising a mapper module for communicating with said storage device and said mapper module being arranged to map at least said portion of said information to said event in response to user interaction with said user prompt.

9. The apparatus of any preceding claim wherein said detector module further comprises a lexical analyzer for communicating with a parser and a symbol table.

10. The apparatus of any preceding claim wherein said event comprises: a calendar event or a task event.

11. The apparatus of any preceding claim wherein said information comprises an email, a peer-to-peer personal identification number (PIN) message, a short message service (SMS) message, a multimedia messaging service (MMS) message, an Instant Message, a web page or a word processing document.

12. The apparatus of any one of claims 1 to 11 wherein said network communications system comprises a server, and wherein said apparatus is resident in said server.

13. The apparatus of any one of claims 1 to 11 wherein said network communications system comprises a wireless device, and wherein said apparatus is resident in said wireless device.

14. The apparatus of any preceding claim in which said information is in an email and a link is inserted in the event which can be used to access the complete email from which the event was created.

15. The apparatus of any one of claims 1 to 14 wherein said new event has a notes section, and said mapping comprises inserting a link to said information in the notes section of said event.

16. The apparatus of claim 15 wherein said information is an email message, and wherein said link is a MIME reference ID associated with said email message.

17. The apparatus of any one of claims 1 to 16 wherein said event is provided in a wireless device.

18. A method of creating a new event in an apparatus for use in a network communications system, the method comprising:
storing a document in a storage device;
receiving said document from said storage device into a detector module, said detector module being a date/time detector;
analyzing said document, said analyzing identifying date and time entries; and
based on the identified content in said document generating a hyperlink for each of said identified date and time entries to open an application capable of creating an event, said identified content being provided to the application wherein the event can be generated in the application directly from the document;
displaying the time and date in the form of the hyperlink;
automatically providing a user prompt related to said event in response to selection of the hyperlink; and
in response to a user interaction with said user prompt starting the application in which an event based on the hyperlinked date and time is created.

19. The method of claim 18 wherein said step of analyzing comprises searching in a lookup table to identify a first type of date and time entries, and wherein said first type of date and time entries comprise a complete date and time format.

20. The method of claim 18 or claim 19 wherein said step of analyzing comprises processing said document in a lexical analyzer and a parser to identify a second type of date and time entries wherein said second type of date and time entries comprises an incomplete data and time format or a relative date and time expression.

21. The method of claim 20 comprising:
generating a hyperlink for each of said identified first type of date and time entries and each of said identified second type of date time entries;
upon selection of said hyperlink by a user, presenting the user a choice of event type to be created;
upon selection of said choice of event type by the user, opening an application capable of creating said new event of said choice of event type; and
mapping specified fields in said document to specified fields in said new event.

22. The method of claim 21 wherein said specified fields in said document comprise subject, to, from and/or body.

23. The method of claim 22 wherein said specified fields in said new event comprise subject, attendees and/or event notes.

24. The method of any one of claims 18 to 23 in which the detector module additionally includes a thread detector and the method includes determining if a defined threshold has been exceeded in respect of said thread: and if said defined threshold has been exceeded, prompting a user to create said new event.

25. The method of claim 24 wherein said document is an email message, and wherein said step of analyzing comprises identifying a thread in said email message.

26. The method of claim 25 wherein said step of creating comprises:
determining if said defined threshold contained in said thread has been exceeded; and
if said defined threshold has been exceeded, prompting a user to create said new event.

27. The method of claim 26 wherein said prompting comprises presenting a user with a menu and, upon selection of an entry in said menu by said user, mapping specified fields in said message to specified fields in said new event.

28. The method of claim 26 or claim 27 wherein said defined threshold is a number of responses received in said thread or a length of time that said thread has been active.

29. The method of any one of claims 18 to 28 wherein said document comprises an email, a peer-to-peer personal identification number (PIN) message, short message service (SMS) message, multimedia messaging service (MMS) message, an Instant Message, web page or word processing document.

30. The method of any one of claims 18 to 29 wherein said new event comprises a calendar event or a task.

31. The method of any one of claims 18 to 30 wherein said network communications system is a wireless network, and wherein said method is carried out in a server communicating to said wireless network.

32. The method of any one of claims 18 to 30 wherein said network communications system is a wireless network, and wherein said method is carried out in a wireless device.

33. The method of any one of claims 18 to 32 in which said document is in an email and a link is inserted in the event which can be used to access the complete email from which the event was created.

34. The method of any one of claims 18 to 32 wherein said new event has a notes section, and said creating comprising inserting a link to said document in the notes section of said new event.

35. The method of claim 34 wherein said document is an email message, and wherein said link is a MIME reference ID associated with said email message.

36. A computer program product for creating a new event in an apparatus for use in a network communications system, the computer program product comprising a computer readable medium embodying code means executable by a computer device, system or apparatus for implementing the method of any one of claims 18 to 35.

37. A network communication system comprising a plurality of apparatuses as claimed in any one of claims 1 to 17.

## Patentansprüche

1. Vorrichtung zur Ereignisbereitstellung zur Verwendung in einem Netzwerkkommunikationssystem, die Vorrichtung umfassend:
eine Speichereinrichtung zum Speichern von Informationen;
ein mit der Speichereinrichtung kommunizierendes Datum-/Uhrzeit-Erkennungsmodul zum Empfangen der Informationen, wobei das Erkennungsmodul angepasst ist zum:
Erkennen einer Bedingung, dass mindestens ein Abschnitt der Informationen einem Ereignis zugeordnet werden könnte;
Identifizieren von Datums- und Uhrzeiteintragungen in den Informationen; und
Erzeugen eines Hyperlinks zum Öffnen einer Anwendung, die in der Lage ist, ein Ereignis für jede der identifizierten Datums- und Uhrzeiteintragungen zu erzeugen, die der Anwendung bereitgestellt werden, wobei das Ereignis in der Anwendung direkt aus den Informationen erzeugt werden kann;
ein Display zum Anzeigen der Uhrzeit und des Datums in Form des Hyperlinks; und
ein mit dem Erkennungsmodul kommunizierendes Aufforderungsmodul zum automatischen Bereitstellen einer Benutzeraufforderung im Zusammenhang mit dem Ereignis als Reaktion auf das Auswählen des Hyperlinks;
wobei als Reaktion auf eine Benutzerinteraktion mit der Benutzeraufforderung die Anwendung gestartet wird, in der ein Ereignis basierend auf dem Datum und der Uhrzeit, die über den Hyperlink verknüpft sind, erstellt wird.

2. Vorrichtung gemäß Anspruch 1, des Weiteren umfassend eine Verweistabelle zum Identifizieren eines ersten Typs der Datums- und Uhrzeiteintragungen,
wobei das Datum-/Uhrzeit-Erkennungsmodul so eingerichtet ist, dass es den ersten Typ der Datums- und Uhrzeiteintragungen identifiziert, und wobei der erste Typ der Datums- und Uhrzeiteintragungen ein vollständiges Datums- und Uhrzeitformat umfasst.

3. Vorrichtung gemäß einem der vorherigen Ansprüche, wobei das Datum-/Uhrzeit-Erkennungsmodul so eingerichtet ist, dass es einen zweiten Typ der Datums- und Uhrzeiteintragungen identifiziert, und wobei der zweite Typ der Datums- und Uhrzeiteintragungen ein unvollständiges Datums- und Uhrzeitformat oder einen relativen Datums- und Uhrzeitausdruck umfasst.

4. Vorrichtung gemäß Anspruch 3, wobei der relative Datums- und Uhrzeitausdruck umfasst: Heute, Morgen, Gestern, Vormittag, Mittag, Nachmittag, Abend oder Nacht.

5. Vorrichtung gemäß einem der vorherigen Ansprüche, des Weiteren enthaltend ein Thread-Erkennungsmodul, das angepasst ist zum:
Identifizieren eines Threads in den Informationen; und
Erkennen, dass in dem identifizierten Thread ein definierter Schwellwert überschritten wurde.

6. Vorrichtung gemäß Anspruch 5, wobei die Informationen eine E-Mail-Nachricht sind, und wobei das Thread-Erkennungsmodul angepasst ist zum:
Identifizieren eines Threads in der E-Mail-Nachricht; und
wenn der definierte Schwellwert in dem identifizierten Thread überschritten wurde, Auffordern eines Benutzers zum Erstellen des Ereignisses.

7. Vorrichtung gemäß Anspruch 6, wobei der definierte Schwellwert eine Anzahl von Antworten ist, die in dem Thread empfangen wurden, oder eine Zeitdauer, die der Thread aktiv gewesen ist.

8. Vorrichtung gemäß Anspruch 5, 6 oder 7, des Weiteren umfassend ein Zuordnungsmodul zum Kommunizieren mit der Speichereinrichtung, wobei das Zuordnungsmodul so eingerichtet ist, dass es als Reaktion auf die Benutzerinteraktion mit der Benutzeraufforderung mindestens den Abschnitt der Informationen dem Ereignis zuordnet.

9. Vorrichtung gemäß einem der vorherigen Ansprüche, wobei das Erkennungsmodul des Weiteren einen lexikalischen Analysierer zum Kommunizieren mit einem Parser und einer Symboltabelle umfasst.

10. Vorrichtung gemäß einem der vorherigen Ansprüche, wobei das Ereignis umfasst: ein Kalenderereignis oder ein Aufgabenereignis.

11. Vorrichtung gemäß einem der vorherigen Ansprüche, wobei die Informationen eine E-Mail, eine Peer-to-Peer-PIN-Nachricht (Personal Identification Number), eine SMS-Nachricht (Short Message Service), eine MSS-Nachricht (Multimedia Messaging Service), eine Instant-Message, eine Webseite oder ein Textverarbeitungsdokument umfassen.

12. Vorrichtung gemäß einem der Ansprüche 1 bis 11, wobei das Netzwerkkommunikationssystem einen Server umfasst und wobei die Vorrichtung in diesem Server resident ist.

13. Vorrichtung gemäß einem der Ansprüche 1 bis 11, wobei das Netzwerkkommunikationssystem ein drahtloses Gerät umfasst und wobei die Vorrichtung in diesem drahtlosen Gerät resident ist.

14. Vorrichtung gemäß einem der vorherigen Ansprüche, wobei die Informationen sich in einer E-Mail befinden und ein Link in das Ereignis eingefügt wird, der verwendet werden kann, um auf die vollständige E-Mail zuzugreifen, aus der das Ereignis erstellt wurde.

15. Vorrichtung gemäß einem der Ansprüche 1 bis 14, wobei das neue Ereignis einen Notizenabschnitt hat und das Zuordnen das Einfügen eines Links zu den Informationen in dem Notizenabschnitt des Ereignisses umfasst.

16. Vorrichtung gemäß Anspruch 15, wobei die Informationen eine E-Mail-Nachricht sind und wobei der Link eine MIME-Referenz-ID ist, die mit der E-Mail-Nachricht assoziiert ist.

17. Vorrichtung gemäß einem der Ansprüche 1 bis 16, wobei das Ereignis in einem drahtlosen Gerät bereitgestellt wird.

18. Verfahren zum Erstellen eines neuen Ereignisses in einer Vorrichtung zur Verwendung in einem Netzwerkkommunikationssystem, das Verfahren umfassend:
das Speichern eines Dokuments in einer Speichereinrichtung;
das Empfangen des Dokuments aus der Speichereinrichtung in einem Erkennungsmodul, wobei das Erkennungsmodul ein Datum-/Uhrzeit-Erkennungsmodul ist;
das Analysieren des Dokuments, wobei bei diesem Analysieren Datums- und Uhrzeiteintragungen identifiziert werden; und
basierend auf dem identifizierten Inhalt in dem Dokument das Erzeugen eines Hyperlinks für jede der identifizierten Datums- und Uhrzeiteintragungen zum Öffnen einer Anwendung, die in der Lage ist, ein Ereignis zu erstellen,
wobei der identifizierte Inhalt der Anwendung bereitgestellt wird, wobei das Ereignis direkt aus dem Dokument erzeugt werden kann;
das Anzeigen der Uhrzeit und des Datums in Form des Hyperlinks;
das automatische Bereitstellen einer Benutzeraufforderung im Zusammenhang mit dem Ereignis als Reaktion auf das Auswählen des Hyperlinks; und
als Reaktion auf eine Benutzerinteraktion mit der Benutzeraufforderung das Starten der Anwendung, in der ein Ereignis basierend auf dem Datum und der Uhrzeit, die über den Hyperlink verknüpft sind, erstellt wird.

19. Verfahren gemäß Anspruch 18, wobei der Schritt des Analysierens das Suchen in einer Verweistabelle umfasst, um einen ersten Typ von Datums- und Uhrzeiteintragungen zu identifizieren, und wobei der erste Typ von Datums- und Uhrzeiteintragungen ein vollständiges Datums- und Uhrzeitformat umfasst.

20. Verfahren gemäß Anspruch 18 oder Anspruch 19, wobei der Schritt des Analysierens das Verarbeiten des Dokuments in einem lexikalischen Analysierer und einem Parser umfasst, um einen zweiten Typ von Datums- und Uhrzeiteintragungen zu identifizieren, wobei der zweite Typ von Datums- und Uhrzeiteintragungen ein unvollständiges Datums- und Uhrzeitformat oder einen relativen Datums- und Uhrzeitausdruck umfasst.

21. Verfahren gemäß Anspruch 20, umfassend:
das Erzeugen eines Hyperlinks für jede der identifizierten Datums- und Uhrzeiteintragungen des ersten Typs und für jede der identifizierten Datums- und Uhrzeiteintragungen des zweiten Typs;
beim Auswählen des Hyperlinks durch einen Benutzer das Präsentieren einer Auswahl für den Typ des zu erstellenden Ereignisses für den Benutzer;
beim Auswählen der Auswahl des Ereignistyps durch den Benutzer das Öffnen einer Anwendung, die in der Lage ist, das neue Ereignis mit dem ausgewählten Ereignistyp zu erstellen; und
das Zuordnen spezifizierter Felder in dem Dokument zu spezifizierten Feldern in dem neuen Ereignis.

22. Verfahren gemäß Anspruch 21, wobei die spezifizierten Felder in dem Dokument umfassen: Betreff, An, Von und/oder Nachrichtenhauptteil.

23. Verfahren gemäß Anspruch 22, wobei die spezifizierten Felder in dem neuen Ereignis umfassen: Betreff, Teilnehmer und/oder Ereignisnotizen.

24. Verfahren gemäß einem der Ansprüche 18 bis 23, wobei das Erkennungsmodul zusätzlich ein Thread-Erkennungsmodul enthält und das Verfahren das Ermitteln einschließt, ob im Hinblick auf den Thread ein definierter Schwellwert überschritten wurde: und wenn der definierte Schwellwert überschritten wurde, das Auffordern eines Benutzers zum Erstellen des neuen Ereignisses.

25. Verfahren gemäß Anspruch 24, wobei das Dokument eine E-Mail-Nachricht ist und wobei der Schritt des Analysierens das Identifizieren eines Threads in der E-Mail-Nachricht umfasst.

26. Verfahren gemäß Anspruch 25, wobei der Schritt des Erstellens umfasst:
das Ermitteln, ob der definierte Schwellwert, der in dem Thread enthalten ist, überschritten wurde
und
wenn der definierte Schwellwert überschritten wurde, das Auffordern eines Benutzers zum Erstellen des neuen Ereignisses.

27. Verfahren gemäß Anspruch 26, wobei das Auffordern das Präsentieren eines Menüs für den Benutzer umfasst, und beim Auswählen eines Eintrags in dem Menü durch den Benutzer das Zuordnen spezifizierter Felder in der Nachricht zu spezifizierten Feldern in dem neuen Ereignis.

28. Verfahren gemäß Anspruch 26 oder Anspruch 27, wobei der definierte Schwellwert eine Anzahl von Antworten ist, die in dem Thread empfangen wurden, oder eine Zeitdauer, die der Thread aktiv gewesen ist.

29. Verfahren gemäß einem der Ansprüche 18 bis 28, wobei das Dokument eine E-Mail, eine Peer-to-Peer-PIN-Nachricht (Personal identification Number), eine SMS-Nachricht (Short Message Service), eine MSS-Nachricht (Multimedia Messaging Service), eine Instant-Message, eine Webseite oder ein Textverarbeitungsdokument umfasst.

30. Verfahren gemäß einem der Ansprüche 18 bis 29, wobei das neue Ereignis ein Kalenderereignis oder eine Aufgabe umfasst.

31. Verfahren gemäß einem der Ansprüche 18 bis 30, wobei das Netzwerkkommunikationssystem ein drahtloses Netzwerk ist und wobei das Verfahren in einem Server durchgeführt wird, der mit dem drahtlosen Netzwerk kommuniziert.

32. Verfahren gemäß einem der Ansprüche 18 bis 30, wobei das Netzwerkkommunikationssystem ein drahtloses Netzwerk ist und wobei das Verfahren in einem drahtlosen Gerät durchgeführt wird.

33. Verfahren gemäß einem der Ansprüche 18 bis 32, wobei das Dokument sich in einer E-Mail befindet und ein Link in das Ereignis eingefügt wird, der verwendet werden kann, um auf die vollständige E-Mail zuzugreifen, aus der das Ereignis erstellt wurde.

34. Verfahren gemäß einem der Ansprüche 18 bis 32, wobei das neue Ereignis einen Notizenabschnitt hat und das Erstellen das Einfügen eines Links zu dem Dokument in dem Notizenabschnitt des neuen Ereignisses umfasst.

35. Verfahren gemäß Anspruch 34, wobei das Dokument eine E-Mail-Nachricht ist und wobei der Link eine MIME-Referenz-ID ist, die mit der E-Mail-Nachricht assoziiert ist.

36. Computerprogrammprodukt zum Erstellen eines neuen Ereignisses in einer Vorrichtung zur Verwendung in einem Netzwerkkommunikationssystem, wobei das Computerprogrammprodukt ein computerlesbares Medium mit darauf verkörperten Programmcodemitteln umfasst, die von einem Computergerät, einem System oder einer Vorrichtung ausgeführt werden können, um das Verfahren gemäß einem der Ansprüche 18 bis 35 zu implementieren.

37. Netzwerkkommunikationssystem, umfassend eine Vielzahl von Vorrichtungen gemäß einem der Ansprüche 1 bis 17.

## Revendications

1. Un appareil fournisseur d'événement pour une utilisation dans un système de communication réseau, ledit appareil comportant :
un dispositif de stockage pour stocker des informations ;
un module détecteur de date/d'heure communiquant avec ledit dispositif de stockage pour recevoir lesdites informations, ledit module détecteur étant adapté pour :
détecter une condition selon laquelle au moins une portion desdites informations pourrait être mappée dans un événement ;
identifier les entrées de date et d'heure dans lesdites informations ; et
générer un lien hypertexte pour ouvrir une application capable de créer un événement pour chacune desdites entrées de date et d'heure identifiées, la date et l'heure étant fournies à l'application où l'événement peut être généré dans l'application directement à partir des informations ;
un affichage pour afficher l'heure et la date sous la forme du lien hypertexte ; et
un module d'invite communiquant avec ledit module détecteur pour fournir automatiquement une invite d'utilisateur liée audit événement en réponse à la sélection du lien hypertexte ;
dans lequel en réponse à une interaction d'utilisateur avec ladite invite d'utilisateur l'application est démarrée dans laquelle un événement basé sur la date et l'heure mises en lien hypertexte est créé.

2. L'appareil de la revendication 1 comportant de plus une table de conversion pour identifier un premier type desdites entrées de date et d'heure, dans lequel ledit module détecteur de date/d'heure est agencé pour identifier ledit premier type desdites entrées de date et d'heure, et dans lequel ledit premier type desdites entrées de date et d'heure comporte un format de date et d'heure complet.

3. L'appareil de n'importe quelle revendication précédente dans lequel ledit module détecteur de date/d'heure est agencé pour identifier un deuxième type desdites entrées de date et d'heure, et dans lequel ledit deuxième type desdites entrées de date et d'heure comporte un format de date et d'heure incomplet ou une expression de date et d'heure relative.

4. L'appareil de la revendication 3 dans lequel ladite expression de date et d'heure relative comporte aujourd'hui, demain, hier, matin, midi, après-midi, soir ou nuit.

5. L'appareil de n'importe quelle revendication précédente comprenant de surcroît un module détecteur de fil adapté pour :
identifier un fil dans lesdites informations ; et
détecter qu'un seuil défini est dépassé dans ledit fil identifié.

6. L'appareil de la revendication 5 dans lequel lesdites informations sont un message de courrier électronique, et dans lequel ledit module détecteur de fil est adapté pour :
identifier un fil dans ledit message de courrier électronique ; et
si ledit seuil défini est dépassé dans ledit fil identifié, inviter un utilisateur à créer ledit événement.

7. L'appareil de la revendication 6 dans lequel ledit seuil défini est un nombre de réponses reçues dans ledit fil ou une durée pendant laquelle ledit fil a été actif.

8. L'appareil de la revendication 5, 6 ou 7, comportant de plus un module mappeur pour communiquer avec ledit dispositif de stockage et ledit module mappeur étant agencé pour mapper au moins ladite portion desdites informations dans ledit événement en réponse à une interaction d'utilisateur avec ladite invite d'utilisateur.

9. L'appareil de n'importe quelle revendication précédente dans lequel ledit module détecteur comporte de plus un analyseur lexical pour communiquer avec un parseur et une table de symboles.

10. L'appareil de n'importe quelle revendication précédente dans lequel ledit événement comporte : un événement de calendrier ou un événement de tâche.

11. L'appareil de n'importe quelle revendication précédente dans lequel lesdites informations comportent un courrier électronique, un message de numéro d'identification personnel (PIN) poste à poste, un message de service de messages courts (SMS), un message de service de messagerie multimédia (MMS), un message instantané, une page web ou un document de traitement de texte.

12. L'appareil de n'importe laquelle des revendications 1 à 11 dans lequel ledit système de communication réseau comporte un serveur, et dans lequel ledit appareil est résident dans ledit serveur.

13. L'appareil de n'importe laquelle des revendications 1 à 11 dans lequel ledit système de communication réseau comporte un dispositif sans fil, et dans lequel ledit appareil est résident dans ledit dispositif sans fil.

14. L'appareil de n'importe quelle revendication précédente dans lequel lesdites informations sont dans un courrier électronique et un lien qui est inséré dans l'événement peut être utilisé pour accéder au courrier électronique complet à partir duquel l'événement a été créé.

15. L'appareil de n'importe laquelle des revendications 1 à 14 dans lequel ledit nouvel événement a une section notes, et ledit mappage comporte l'insertion d'un lien vers lesdites informations dans la section notes dudit événement.

16. L'appareil de la revendication 15 dans lequel lesdites informations sont un message de courrier électronique, et dans lequel ledit lien est une identification de référence MIME associée audit message de courrier électronique.

17. L'appareil de n'importe laquelle des revendications 1 à 16 dans lequel ledit événement est fourni dans un dispositif sans fil.

18. Un procédé pour créer un nouvel événement dans un appareil pour une utilisation dans un système de communication réseau, le procédé comportant :
le stockage d'un document dans un dispositif de stockage ;
la réception dudit document dudit dispositif de stockage dans un module détecteur, ledit module détecteur étant un détecteur de date/d'heure ;
l'analyse dudit document, ladite analyse identifiant les entrées de date et d'heure ; et
sur la base du contenu identifié dans ledit document la génération d'un lien hypertexte pour chacune desdites entrées de date et d'heure identifiée afin d'ouvrir une application capable de créer un événement, ledit contenu identifié étant fourni à l'application où l'événement peut être généré directement à partir du document ;
l'affichage de l'heure et la date sous la forme du lien hypertexte ;
la fourniture automatique d'une invite d'utilisateur liée audit événement en réponse à la sélection du lien hypertexte ; et
en réponse à une interaction d'utilisateur avec ladite invite d'utilisateur le démarrage de l'application dans laquelle un événement basé sur la date et l'heure mises en lien hypertexte est créé.

19. Le procédé de la revendication 18 dans lequel ladite étape d'analyse comporte la recherche dans une table de conversion afin d'identifier un premier type d'entrées de date et d'heure, et dans lequel ledit premier type d'entrées de date et d'heure comporte un format de date et d'heure complet.

20. Le procédé de la revendication 18 ou de la revendication 19 dans lequel ladite étape d'analyse comporte le traitement dudit document dans un analyseur lexical et un parseur afin d'identifier un deuxième type d'entrées de date et d'heure dans lequel ledit deuxième type d'entrées de date et d'heure comporte un format de date et d'heure incomplet ou une expression de date et d'heure relative.

21. Le procédé de la revendication 20 comportant :
la génération d'un lien hypertexte pour chaque entrée dudit premier type identifié d'entrées de date et d'heure et chaque entrée dudit deuxième type identifié d'entrées de date et d'heure ;
après sélection dudit lien hypertexte par un utilisateur, la présentation à l'utilisateur d'un choix de type d'événement devant être créé ;
après sélection dudit choix de type d'événement par l'utilisateur, l'ouverture d'une application capable de créer ledit nouvel événement dudit choix de type d' événement ; et
le mappage des champs spécifiés dans ledit document dans les champs spécifiés dans ledit nouvel événement.

22. Le procédé de la revendication 21 dans lequel lesdits champs spécifiés dans ledit document comportent objet, à, de et/ou corps.

23. Le procédé de la revendication 22 dans lequel lesdits champs spécifiés dans ledit nouvel événement comportent objet, participants et/ou notes d'événement.

24. Le procédé de n'importe laquelle des revendications 18 à 23 dans lequel le module détecteur comprend de surcroît un détecteur de fil et le procédé comprend une étape consistant à déterminer si un seuil défini a été dépassé concernant ledit fil : et si ledit seuil défini a été dépassé, une étape consistant à inviter un utilisateur à créer ledit nouvel événement.

25. Le procédé de la revendication 24 dans lequel ledit document est un message de courrier électronique, et dans lequel ladite étape d'analyse comporte l'identification d'un fil dans ledit message de courrier électronique.

26. Le procédé de la revendication 25 dans lequel ladite étape de création comporte :
l'étape consistant à déterminer si ledit seuil défini contenu dans ledit fil a été dépassé ; et
si ledit seuil défini a été dépassé, l'étape consistant à inviter un utilisateur à créer ledit nouvel événement.

27. Le procédé de la revendication 26 dans lequel ladite invite comporte la présentation d'un menu à un utilisateur et, après sélection d'une entrée dans ledit menu par ledit utilisateur, le mappage des champs spécifiés dans ledit message dans les champs spécifiés dans ledit nouvel événement.

28. Le procédé de la revendication 26 ou de la revendication 27 dans lequel ledit seuil défini est un nombre de réponses reçues dans ledit fil ou une durée pendant laquelle ledit fil a été actif.

29. Le procédé de n'importe laquelle des revendications 18 à 28 dans lequel ledit document comporte un courrier électronique, un message de numéro d'identification personnel (PIN) poste à poste, un message de service de messages courts (SMS), un message de service de messagerie multimédia (MMS), un message instantané, une page web ou un document de traitement de texte.

30. Le procédé de n'importe laquelle des revendications 18 à 29 dans lequel ledit nouvel événement comporte un événement de calendrier ou une tâche.

31. Le procédé de n'importe laquelle des revendications 18 à 30 dans lequel ledit système de communication réseau est un réseau sans fil, et dans lequel ledit procédé est réalisé dans un serveur communiquant avec ledit réseau sans fil.

32. Le procédé de n'importe laquelle des revendications 18 à 30 dans lequel ledit système de communication réseau est un réseau sans fil, et dans lequel ledit procédé est réalisé dans un dispositif sans fil.

33. Le procédé de n'importe laquelle des revendications 18 à 32 dans lequel ledit document est dans un courrier électronique et un lien qui est inséré dans l'événement peut être utilisé pour accéder au courrier électronique complet à partir duquel l'événement a été créé.

34. Le procédé de n'importe laquelle des revendications 18 à 32 dans lequel ledit nouvel événement a une section notes, et ladite création comporte l'insertion d'un lien vers ledit document dans la section notes dudit nouvel événement.

35. Le procédé de la revendication 34 dans lequel ledit document est un message de courrier électronique, et dans lequel ledit lien est une identification de référence MIME associée audit message de courrier électronique.

36. Un produit de programme informatique pour créer un nouvel événement dans un appareil pour une utilisation dans un système de communication réseau, le produit de programme informatique comportant un support lisible par ordinateur incorporant des moyens de code exécutables par un appareil, système ou dispositif informatique pour implémenter le procédé de n'importe laquelle des revendications 18 à 35.

37. Un système de communication réseau comportant une pluralité d'appareils tel que revendiqué dans n'importe laquelle des revendications 1 à 17.
